# EUROPÄISCHE PATENTSCHRIFT

(11) **EP 2 142 402 B1**
(45) Veröffentlichungstag und Bekanntmachung des Hinweises auf die Patenterteilung: **04.07.2012**
(21) Anmeldenummer: 08736475.8
(22) Anmeldetag: 23.04.2008
(51) Int. Cl.: B60R 25/00, G07C 9/00, G06F 3/033

(54) **MOBILER IDENTIFIKATIONSGEBER**
MOBILE IDENTIFICATION DEVICE
DISPOSITIF D'IDENTIFICATION MOBILE

(30) Priorität: 03.05.2007 DE 102007021135
(43) Veröffentlichungstag der Anmeldung: 13.01.2010
(73) Patentinhaber: Huf Hülsbeck & Fürst GmbH & Co. KG, 42551 Velbert (DE)
(72) Erfinder: MÖNIG, Stefan, 58332 Schwelm (DE)
(74) Vertreter: Vogel, Andreas
(86) Internationale Anmeldenummer: PCT/EP2008/054888
(87) Internationale Veröffentlichungsnummer: WO 2008/135385

(56) Entgegenhaltungen:
- EP-A- 1 750 230
- DE-A1- 10 142 967
- US-A1- 2002 021 291
- US-A1- 2003 067 452
- US-A1- 2003 132 923
- US-A1- 2004 090 315

## Beschreibung

Die Erfindung betrifft einen mobilen Identifikationsgeber eines Sicherheitssystems für eine schlüssellose Aktivierung einer Schließvorrichtung eines Kraftfahrzeuges, mit einem Gehäuse und einem Sensordisplay, wobei in dem Gehäuse eine Elektronikeinheit mit einer Sende- und Empfangseinheit angeordnet ist, die mit einer kraftfahrzeugseitigen Sende- und Empfangseinheit in Kommunikation steht, mittels derer eine Identifikationsprüfung zur Feststellung einer Benutzerberechtigung durchführbar ist, eine Oberfläche des Sensordisplay einerseits zur Eingabe und andererseits zur Ausgabe einer Information dient.

Schließvorrichtungen für Kraftfahrzeuge sind zur Steigerung des Komforts für den Benutzer und zur Erhöhung der Diebstahlsicherheit oft mit einer elektronischen Betätigungseinheit, insbesondere mit einem mobilen Identifikationsgeber ausgestattet. Nach einer entsprechenden Betätigung durch den Benutzer erfolgt eine Datenkommunikation zwischen dem mobilen Identifikationsgeber und einer Sende- und Empfangseinheit, welche im Fahrzeug angeordnet ist. Im Rahmen der Datenkommunikation wird ein Code, vorzugsweise über elektromagnetische Wellen, ausgetauscht. Im Falle einer positiven Auswertung des Codes können anschließend beispielsweise die Türen oder der Kofferraumdeckel des Kraftfahrzeuges fernbedienbar ent- und/oder verriegelt sowie weitere Funktionen ausgelöst werden.

In der DE 20 2005 015 165 U1 ist eine Schließvorrichtung für Fahrzeuge offenbart, die einen tragbaren Schlüssel mit einem Sensordisplay aufweist. Das Sensordisplay ist nicht nur anzeigewirksam, sondern kann zugleich als Tastatur zum Abruf von Daten und zur Steuerung von Schließ- und/oder Betriebszuständen im Fahrzeug genutzt werden. Solcher Art Sensordisplays - auch als "Touchscreen" bezeichnet - weisen häufig ein Anzeigemittel sowie eine darüber liegende Steuerschicht auf. Letztere kann beispielhaft aus zwei elektrisch leitfähigen Indiumzinnoxidschichten (ITO) bestehen. Jede der beiden ITO-Schichten verfügt über einen streifenartigen Aufbau, wobei die Ausrichtung der Streifen der beiden Schichten um 90° zueinander versetzt ist. Berührt ein Benutzer das Sensordisplay an einer bestimmten Stelle, so berühren sich dort die zwei ITO-Schichten, wodurch ein elektrisch leitender Kontakt entsteht. Dieser elektrische Kontakt dient zur Bestimmung der Position des Berührungspunktes auf dem Sensordisplay. Damit der Schlüssel der fernsteuerbaren Schließvorrichtung eine passende Größe beibehält, darf das Sensordisplay nicht zu groß ausgelegt sein. Als nachteilig hat es sich herausgestellt, dass aufgrund dieser geringen Größe und der Anzahl an nebeneinander angeordneten Funktionen häufig Fehlbedienungen auftreten.

Das Document US-A-2004, 090315 offenbart ein System gemäß dem Oberbegriff des Anspruchs 1.

Es ist Aufgabe der vorliegenden Erfindung einen mobilen Identifikationsgeber zu schaffen, der die genannten Nachteile vermeidet, insbesondere einen mobilen ldentifikationsgeber bereit zu stellen, der eine hohe Bediensicherheit aufweist.

Zur Lösung dieser Aufgabe wird ein mobiler ldentifikationsgeber mit den Merkmalen des Anspruches 1 vorgeschlagen. In den abhängigen Ansprüchen sind bevorzugte Weiterbildungen ausgeführt.

Es ist erfindungsgemäß vorgesehen, dass der mobile ldentifikationsgeber ein stiftartiges Eingabemittel aufweist, wobei das Eingabemittel zur Eingabe der Information dient.

Mittels des Eingabemittels können die Informationen über das Sensordisplay in den mobilen Identifikationsgeber eingegeben werden. Ein Benutzer muss sich nicht mehr seiner Finger bedienen, womit die Fehlerwahrscheinlichkeit bei der Eingabe deutlich reduziert wird. Weiterhin kann die auf dem Sensordisplay angezeigte Informationsdichte erhöht werden, um so dem Benutzer einen umfassenden Überblick über die Schließzustände etc. seines Fahrzeuges zu ermöglichen. Durch die Verwendung des Eingabemittels besteht nicht mehr die Gefahr, dass durch eine Fehlbedienung eine nicht gewollte Information in den mobilen Identifikationsgeber eingegeben und an das Fahrzeug übermittelt wird.

Um die Präzision der Eingabe weiter zu erhöhen, kann in einer vorteilhaften Ausgestaltung das Eingabemittel eine Eingabespitze aufweisen und ein Kontakt zwischen dem Sensordisplay und der Eingabespitze eine Eingabe der Information ermöglichen. Um eine Vielzahl von Informationen auf dem Sensordisplay darzustellen, kann letzteres in eine Anzahl von Eingabebereichen für jede einzelne Information unterteilt sein. Bei dieser Ausgestaltung begrenzt nur noch die Größe der Eingabespitze die benötigte Fläche des auf dem Sensordisplay dargestellten Eingabebereiches. Durch ein Berühren des Sensordisplays mit der Eingabespitze wird die dem Eingabebereich unterlegte Funktion bzw. Information im mobilen Identifikationsgeber verarbeitet. Beispielhaft kann es sich dabei um die Aufforderung handeln, dass Kraftfahrzeug zu ver- oder entriegeln. Ein entsprechend ausgestaltetes Symbol kann im jeweiligen Eingabebereich angezeigt und durch die Eingabespitze des Eingabemittels aktiviert werden. Durch die Verwendung einer Eingabespitze wird die Größe des Eingabemittels weiter reduzier, was eine schnelle und präzise Eingabe auch größerer Informationsmengen in den mobilen Identifikationsgeber erleichtert. Soll allerdings die Menge an Eingabebereichen konstant bleiben, kann im Gegenzug die Größe des Sensordisplays und damit jene des mobilen Identifikationsgebers reduziert werden.

Damit das Eingabemittel bzw. die Eingabespitze nicht die Oberfläche des Sensordisplays verkratzt oder eine Abnutzung auftritt, ist in einer weiteren vorteilhaften Ausgestaltung vorgesehen, dass die Eingabespitze einen weichen Kunststoffkern aufweist. Dieser weiche Kunststoffkern steht im direkten Kontakt mit dem Sensordisplay und überträgt die vom Benutzer in das Eingabemittel eingebrachte Kraft. Da erfindungsgemäß die Härte des Sensordisplays größer ist als jene der Eingabespitze kann letztere das Sensordisplay nicht beschädigen. Weiterhin können etwaige Schmutzpartikel von der Eingabespitze aufgenommen werden, um so ein Verkratzen des Sensordisplays zu verhindern. Zur Verbesserung der haptischen Wahrnehmung kann das Eingabemittel als ein Eingabestift mit einem weichen Kunststoffkern ausgestaltet sein. Dabei kann der Eingabestift einen harten und grlfflgen Schaft aufweisen, in welchem der weiche Kunststoffkern gelagert ist und die Eingabespitze bildet.

In einer möglichen Ausführungsform ist der Eingabestift bzw, der Schaft des Eingabestiftes aus einem Kunststoff und/oder einem Metall hergesteilt. Dabei weisen Kunststoffe den Vorteil auf, dass diese leicht zu verarbeiten sind und ein geringes spezifisches Gewicht besitzen. Folglich ist der dem mobilen Identifikationsgeber zugeordnete Eingabestift leicht und stellt keinen den Benutzer behindernden Gegenstand dar. Ein Eingabestift, welcher teilweise oder ganz aus einem Metall gefertigt ist, besitzt im Gegensatz dazu eine höhere Festigkeit. Vorzugsweise kann ein metallener Eingabestift derart in den mobilen Identifikationsgeber Integriert sein, dass dieser als Teil einer skelettartigen Gehäusebasis fungiert.

In einer weiteren vorteilhaften Ausgestaltung lagert das Eingabemittel in einer Aufnahme.

Die Aufnahme schützt das Eingabemittel vor Umwelteinflüssen.

Insbesondere kann der Eingabestift in einer hülsenartigen Aufnahme lagern. Diese Ausgestaltung setzt voraus, dass der Eingabestift eine zylinderartige Gestaltung aufweist. Die den Eingabestift aufnehmende hülsenartige Aufnahme kann an einer Außenfläche des Gehäuses des mobilen Identifikationsgebers angeordnet sein. Diese Ausführungsvariante bietet sich Insbesondere dann an, wenn die hülsenartige Aufnahme nachträglich an das Gehäuse angebracht wird. Dieses ist beispielsweise mittels Kleben, Schweißen, vorzugsweise Laserschweißen, Reibschweißen etc. möglich. Ist hingegen eine Verwendung des Eingabemittels von vornherein vorgesehen, kann die hülsenartige Aufnahme für den Eingabestift auch im Inneren des Gehäuses angeordnet sein. Eine entsprechende Öffnung im Gehäuse ermöglicht es dem Benutzer den Eingabestift dann in die hülsenartige Aufnahme einzuschieben. Vorteilhafterweise weist die Aufnahme eine Länge auf, welche etwa gleich Ist mit jener des Eingabestiftes.

Eine die Erfindung verbessernde Maßnahme sieht vor, dass ein Kraftspeicher innerhalb der Aufnahme an dem Eingabemittel angeordnet ist und der Kraftspeicher in einer Stellung des Eingabemittels dieses aus der Aufnahme drückt. Ein Benutzer kann somit das Eingabemittel in die Aufnahme einschieben und dabei den Kraftspeicher spannen. Ein Rastmittel, welches mit einem am Eingabemittel angeordneten Gegenrastmittel kraft- und/oder formschlüssig zusammenwirkt, hält das Eingabemittel in der Aufnahme. Vorzugsweise bedarf es nur eines kurzen Eindrückens des Eingabemittels In die Aufnahme hinein, um so die Rast-Gegenrastmittel-Verbindung zu lösen. Im Anschluss kann der vorgespannte Kraftspeicher das Eingabemittel aus der Aufnahme herausdrücken. Daran anschließend kann der Benutzer das Eingabemittel leicht aus der Aufnahme entnehmen. Diese gesicherte Lage des Eingabemittels hat sich als besonders komfortabel herausgestellt.

Der erfindungsgemäße mobile Identifikationsgeber kann in einem so genannten Keyless-Go-System für ein Fahrzeug Verwendung finden. Bei der Erfindungsweist aus Sicherheitsgründen das Gehäuse des mobilen Identifikationsgebers ein Schlüssellager auf wobei das Schlüssellager einen Notschlüssel lagert. Dabei dient der Notschlüssel zur Betätigung eines mechanischen Schlosses des Kraftfahrzeuges und ist reversibel aus dem Schlüssellager entnehmbar. Ausgangsbasis für die beschriebene Verwendung eines Notschlüssels sind Bedenken hinsichtlich der Sicherheit und der Zuverlässigkeit elektronischer Systeme. Folglich weisen moderne Kraftfahrzeuge als Redundanz noch ein mechanisches Schloss auf, welches mittels des Notschlüssels geöffnet bzw. verschlossen werden kann. Um den mechanischen Notschlüssel nahezu unverlierbar gleichzeitig aber jederzeit erreichbar zu lagern, hat es sich als vorteilhaft erwiesen, den Notschlüssel im Gehäuse des mobilen Identifikationsgebers zu integrieren. Bei der Erfindung ist das Eingabemittel an den Notschlüssel angeordnet. Vorzugsweise sind dabei Eingabemittel und der Notschlüssel einstückig.

Um funktionsgemäß eingesetzt werden zu können, weist der Notschlüssel einen Griffbereich und ein Bartelement auf. Dabei dient das Bartelement zur eindeutigen Identifikation des Notschlüssels gegenüber dem mechanischen Schloss, während der Griffbereich zur rotatorischen Betätigung des Notschlüssels dient. In einer ersten vorteilhaften Ausführungsvariante ist das Eingabemittel an dem Bartelement angeordnet. Die Position des Eingabemittels hängt dabei von der Ausgestaltung des Bartelementes ab. So kann das Bartelement einerseits aus einem länglichen, mit einem etwa rechteckigen Querschnitt versehenen Segment bestehen, auf dessen Seitenflanken charakteristische Vertiefungen eingebracht sind. In diesem Fall hat es sich als vorteilhaft erwiesen, wenn das Eingabemittel auf einer der planen Ober- oder Unterseite des Bartelementes angeordnet ist. Andererseits kann das Bartelement einen charakteristischen Bodenbereich aufweisen, in dem zum Teil tiefere Einschnitte eingebracht sind. Dabei mündet das Bartelement häufig in einer dreieckartig zulaufenden Bartspitze. Bei solcher Art von Notschlüsseln hat es sich als vorteilhaft erwiesen das Eingabemittel in die Bartspitze zu integrieren. So ist es möglich, den Notschlüssel füllerartig zu bedienen.

In einer zweiten Variante kann das Eingabemittel an dem Griffbereich des Notschlüssels angeordnet sein. Im Allgemeinen weist letzterer Bereich eine etwa rechteckige Außenform auf, um so eine leichte Handhabung des Notschlüssels zu erreichen. In einer möglichen Ausführungsform ist es deshalb vorgesehen, dass das Eingabemittel an einem Eckbereich des Griffbereiches angeordnet ist. Denkbar ist auch eine Positionierung an einer der Seitenflächen des Griffbereiches.

Eine weitere die Erfindung verbessernde Maßnahme sieht vor, dass innerhalb des Schlüssellagers ein Kraftspeicher angeordnet ist und der Kraftspeicher in einer Stellung des Notschlüssels, diesen aus dem Schlüssellager drückt. Wie schon beim Eingabemittel beschrieben, kann in dem Schlüssellager ein Rast- bzw. Gegenrastmittel vorgesehen sein, welches mit dem Notschlüssel zusammenwirkt und die reversibel entnehmbare Lagerung sicherstellt. Der Notschlüssel kann dazu in einer Einraststellung gegen den Kraftspeicher kraft- und/oder formschlüssig gehalten werden. Durch ein leichtes Eindrücken des Notschlüssels wird die Rastverbindung zwischen dem Rast- bzw. Gegenrastmittel gelöst und der Kraftspeicher schiebt den Notschlüssel in eine Entnahmestellung, aus der letzterer problemlos von einem Benutzer entnommen werden kann.

Damit das Eingabemittel bzw. der mobile Identifikationsgeber auch bei Dämmerung oder in der Dunkelheit eingesetzt werden kann, ist in einer weiteren vorteilhaften Ausführungsvariante vorgesehen, dass das Eingabemittel eine Beleuchtungseinheit aufweist. Die Beleuchtungseinheit kann in der Nähe bzw. in der Eingabespitze angeordnet sein. Vorteilhafterweise handelt es sich bei der Beleuchtungseinheit um eine LED oder eine OLED. Beide Beleuchtungseinheiten sind für ihre hohe Effizienz sowie geringen Energieverbrauch bekannt. Insbesondere die organische Licht emittierende Diode (OLED) kann als folienähnliches Objekt auf der Außenseite des Eingabestiftes angeordnet sein und so diesen vollständig erleuchten.

In einer weiteren vorteilhaften Ausgestaltung weist der mobile ldentifikationsgeber einen zentralen Speicher und/oder eine Schnittstelle auf. Mittels dieser Schnittstelle ist es dem mobilen Identifikationsgeber möglich, mit einem externen Rechner in Verbindung zu treten und Informationen zu übermitteln. Bei diesen Informationen kann es sich um verschiedene Schaltzustände von Elektromotoren, Schlösser, Klimaanlagen oder fahrzeuginternen Sensoren etc. handeln. Vorteilhafterweise kann die Schnittstelle auch dazu dienen, mit einem Rechner einer Werkstatt des Kraftfahrzeughändlers in Verbindung zu treten, um Wartungsdaten oder sonstige für eine mögliche Reparatur des Kraftfahrzeuges entscheidende Informationen zu übermitteln. In diesem Zusammenhang hat es sich als vorteilhaft erwiesen, wenn die Schnittstelle eine der folgenden Normen aufweist: Infrarot, Bluetooth, WLAN, USB, RS232 oder RS485.

Weitere Vorteile, Merkmale und Einzelheiten der Erfindung ergeben sich aus der nachfolgenden Beschreibung, in der unter Bezugnahme auf die Zeichnungen mehrere mögliche Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
- Figur 1: eine rein schematische Darstellung eines mobilen ldentifikationsgebers, der in Datenkommunikation mit einer Schließvorrichtung eines Kraftfahrzeuges steht,
- Figur 2: ein Gehäuse des mobilen Identifikationsgebers sowie einen Notschlüssel in dreidimensionaler Ansicht,
- Figur 3: eine weitere Ausgestaltung des Notschlüssels,
- Figur 4: eine weitere vorteilhafte Ausführungsvariante des Notschlüssels und

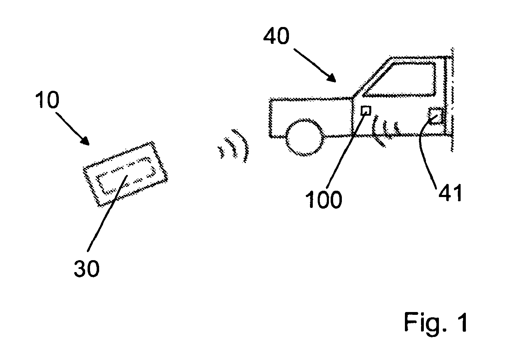

In Figur 1 ist rein schematisch ein mobiler Identifikationsgeber 10 dargestellt, der mit einer Sende- und Empfangseinheit 41 eines Kraftfahrzeuges 40 in Kommunikation steht. Der mobile Identifikationsgeber 10 weist unter anderem eine Elektronikeinheit auf, die mit einer Batterie als Energiespeicher versorgt wird.

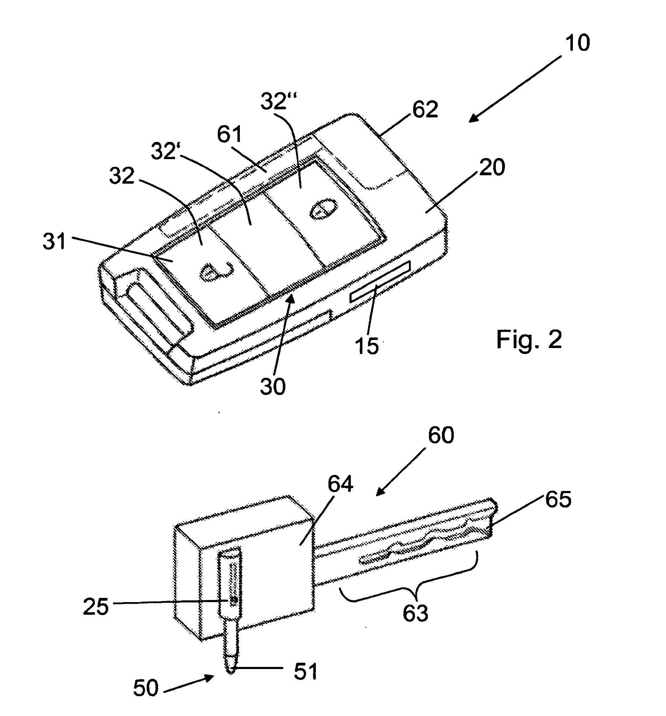

In Figur 2 ist der quaderartige mobile ldentifikationsgeber 10 gezeigt. Dieser weist ein Gehäuse 20 auf in dessen Oberseite ein Sensordisplay 30 eingelassen ist. Der mobile Identifikationsgeber 10 dient vorrangig dazu, Anweisungen an das Sicherheitssystem des Kraftfahrzeuges 40 zu übermitteln. So wird vorrangig das Ver- und Entriegeln einer Schließvorrichtung 100 des Kraftfahrzeuges 40 gesteuert. Denkbar ist es aber auch, dass Informationen über den Fahrzeugzustand - wie etwa die Temperatur oder den Zustand der Fahrzeugbeleuchtung - an den mobilen Identifikationsgeber 10 übertragen werden. Das Sensordisplay 30 ermöglicht es diese verschiedenen Informationen anzuzeigen. So ist in Figur 2 das Sensordisplay 30 in drei Eingabebereich 32, 32', 32" unterteilt. Durch eine Berührung des Sensordisplays 30 in einem der Eingabebereiche 32, 32', 32" kann der mobile Identifikationsgeber 10 aktiviert werden. Beispielhaft soll dieses an einem Ver- bzw. Entriegeln der Schließvorrichtung 100 des Kraftfahrzeuges 40 beschrieben werden. Der Eingabebereich 32" zeigt das Symbol eines geschlossenen Schlosses an. Wird das Sensordisplay 30 in diesem Eingabebereich 32" berührt, so übersendet der mobile ldentifikationsgeber 10 ein Schließsignal an die Schließvorrichtung 100 des Kraftfahrzeuges 40, welches zu einer Verriegelung führt. Erfindungsgemäß kann nach einer erfolgreichen Verriegelung eine Kommunikation zwischen dem Kraftfahrzeug 40 und dem mobilen Identifikationsgeber 10 stattfinden, die in einer Änderung der dem Eingabebereich 32" unterlegten Farbe resultiert. Somit ist eine visuelle Verifizierung der erfolgreichen Verriegelung durch den Benutzer möglich. Möchte der Benutzer das Kraftfahrzeug 40 wieder entriegeln, so genügt ein Druck auf den Eingabebereich 32, auf dem das Symbol eines geöffneten Schlosses wiedergegeben ist. Mittels der druck- und ortsensitiven Oberfläche 31 ist es dem Sensordisplay 30 möglich den Ort der Kontaktierung zu bestimmen.

Weiterhin weist er mobilen Identifikationsgeber 10 eine Schnittstelle 15 auf. Diese Schnittstelle 15 dient zur Übertragung von Informationen an einen externen Rechner. So können Wartungsdaten oder sonstige für eine mögliche Reparatur des Kraftfahrzeuges 40 notwendige Informationen an einen Rechner einer Werkstatt übermittelt werden.

Aus Gründen der Redundanz weist der mobile ldentifikationsgeber 10 einen Notschlüssel 60 auf. Dieser Notschlüssel 60 lagert innerhalb eines Schlüssellagers 61, das in dem Gehäuse 20 integriert ist. Der Notschlüssel 60 dient zur Ver- bzw. Entriegelung eines im Kraftfahrzeug 40 angeordneten mechanischen Schlosses. Der Notschlüssel 60 weist ein Bartelement 63 sowie einen Griffbereich 64 auf. Das Bartelement 63 dient dabei zur Identifikation des Notschlüssels 60 gegenüber dem mechanischen Schloss, wozu in das Bartelement 63 eine Identifikationsstruktur 65 eingebracht ist.

Aufgrund der großen Anzahl von Sensoren und Steuerungsgeräten, die in dem Kraftfahrzeug 40 integriert sind und mit dem mobilen Identifikationsgeber 10 kommunizieren, werden auf dem Sensordisplay 30 eine große Anzahl unterschiedlicher Symbole dargestellt. Die der Erfindung zugrunde liegende Aufgabe des präzisen Ansteuerns der verschiedenen Eingabebereiche 32, 32', 32" wird durch ein Eingabemittel 50 erreicht. Besagtes Eingabemittel 50 dient dazu, die Informationen oder Weisungen, welche mittels des mobilen Identifikationsgebers 10 an das Kraftfahrzeug 40 übertragen werden sollen in das Sensordisplay 30 einzugeben. In der in Figur 2 dargestellten Ausführungsvariante ist das Eingabemittel 50 an dem Griffbereich 64 des Notschlüssels 60 angeordnet. Das Eingabemittel 50 ist zylinderartig ausgestaltet und weist eine kegelförmig zulaufende Eingabespitze 51 auf. Mittels dieser Eingabespitze 51 kann ein Benutzer das Sensordisplay 30 berühren und so präzise Informationen und/oder Befehle in den mobilen Identifikationsgeber 10 eingeben. Das zylinderartige Eingabemittel 50 ist in einer Aufnahme 25 gelagert. Die Aufnahme 25 ist an dem rechteckig ausgestalteten Griffbereich 64 des Notschlüssels 60 aufgebracht. Die Aufnahme ist hülsenartig ausgestaltet und weist eine längliche Aussparung auf, durch die ein Betätigungsglied ragt. Dieses Betätigungsglied ist mit dem Eingabemittel 50 verbunden und erlaubt ein reversibles Verschieben des Eingabemittels 50.

Der Notschlüssel 60 kann durch eine Öffnung 62 des Gehäuses 20 in das Schlüssellager 61 eingeführt werden. Erfindungsgemäß ist es vorgesehen, dass in dem Schlüssellager 61 ein Kraftspeicher, insbesondere eine Feder, angeordnet ist und mit dem Notschlüssel in Kontakt gerät. Wird der Notschlüssel 60 in das Schlüssellager 61 eingeschoben so hält ein dort angeordnetes Rastmittel den Notschlüssel 60 in Position. Möchte ein Benutzer den Notschlüssel dem Gehäuse 20 entnehmen, so bedarf es eines kurzen Druckes, welcher den Notschlüssel in eine Stellung überführt, in der das Rastmittel nicht mehr im Eingriff mit dem Notschlüssel 61 steht. Im Anschluss daran drückt der Kraftspeicher den Notschlüssel 60 aus dem Schlüssellager 61 heraus.

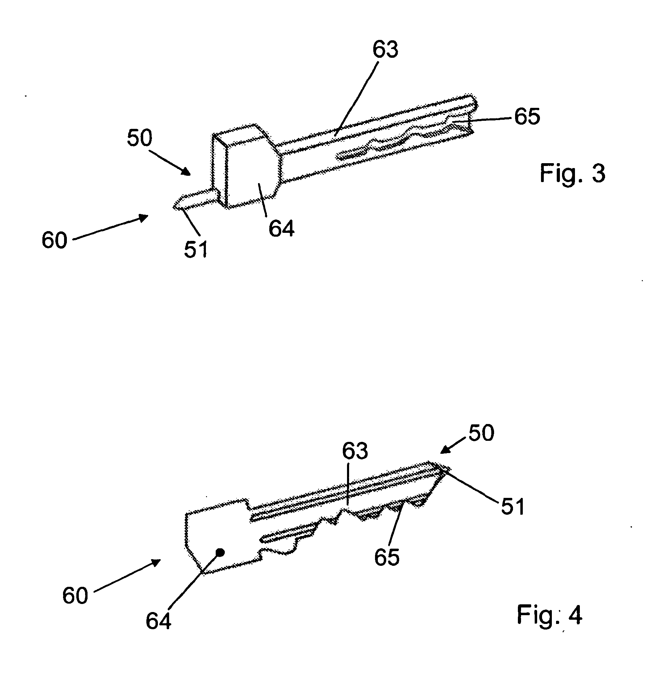

In Figur 3 ist eine weitere mögliche Anordnung des Eingabemittels an dem Griffbereich 64 des Notschlüssels 60 dargestellt. In dieser Variante liegt das Eingabemittel 50 nicht an einer Querseite des Griffbereiches 64, sondern an einer der Längsseiten. Dadurch ergibt sich ein lang gestreckter schmaler Notschlüssel 60, der auch in klein dimensionierte mobile Identifikationsgeber 10 integriert werden kann.

Die in Figur 2 und 3 dargestellten Notschlüssel 60 weisen ein Bartelement 63 auf, dessen Identifikationsstruktur 65 in eine der Längsseiten des Bartelementes 63 eingebracht ist. Im Gegensatz dazu ist der in Figur 4 dargestellte Notschlüssel 60 mit einer Identifikationsstruktur 65 versehen, die zackenartig in die Unterseite des Bartelementes 63 eingebracht ist. Solcher Art Notschlüssel 60 weist häufig eine dreieckigartige Spitze auf. Erfindungsgemäß ist es vorgesehen, dass diese Spitze als Eingabemittel 50 ausgestaltet ist. In dem dargestellten Beispiel weist das Eingabemittel 50 eine Eingabespitze 51 auf, die für die Eingabe der Information in das Sensordisplay 30 genutzt werden kann.

### Bezugszeichenliste

- 10: Mobiler Identifikationsgeber
- 15: Schnittstelle

- 20: Gehäuse
- 25: Aufnahme für Eingabemittel 50

- 30: Sensordisplay
- 31: Oberfläche
- 32,32',32": Eingabebereich

- 40: Kraftfahrzeug
- 41: Sende- und Empfangseinheit

- 50: Eingabemittel
- 51: Eingabespitze
- 53: weicher Kunststoffkern
- 55: Eingabestift
- 56: Ende des Eingabestiftes 55

- 60: Notschlüssel
- 61: Schlüssellager für den Notschlüssel 60
- 62: Öffnung des Schlüssellagers 61
- 63: Bartelement
- 64: Griffbereich
- 65: Identifikationsstruktur

- 100: Schließvorrichtung

## Patentansprüche

1. Mobiler Identifikationsgeber (10) eines Sicherheitssystems für eine schlüssellose Aktivierung einer Schließvorrichtung eines Kraftfahrzeuges (40), mit
einem Gehäuse (20) und einem Sensordisplay (30), wobei
in dem Gehäuse (20) eine Elektronikelnheit mit einer Sende- und Empfangseinheit angeordnet ist, die mit einer kraftfahrzeugseidgen Sende- und Empfangseinheit (41) in Kommunikation steht, mittels derer eine Identifikationsprüfung zur Feststellung einer Benutzerberechtigung durchführbar ist,
eine Oberfläche (31) des Sensordispays (30) einerseits zur Eingabe und andererseits zur Ausgabe einer Information dient,
dass der mobile Identifikatiansgeber (10) ein stiftartiges Eingabemittel (50) aufweist,
wobei das Eingabemittel (50) zur Eingabe der Information dient,
**dadurch gekennzeichnet,**
**dass** das Gehäuse (20) ein Schlüssellager (61) aufweist und das Schlüssellager (61) einen Notschlüssel (60) lagert, wobei der Notschlüssel (60) zur Betätigung eines mechanischen Schlosses des Kraftfahrzeuges (40) dient und reversibel aus dem Schlüssellager (61) entnehmbar ist
und **dass** das Eingabemittel (50) an dem Notschlüssel (60) angeordnet ist.

2. Mobiler Identifikationsgeber (10) nach Anspruch 1,
**dadurch gekennzeichnet,**
**dass** das Eingabemittel (50) eine Eingabespitze (51) aufweist und ein Kontakt zwischen dem Sensordisplay (30) und der Eingabespitze (51) eine Eingabe der Information ermöglicht.

3. Mobiler Identifikationsgeber (10) nach Anspruch 2,
**dadurch gekennzeichnet,**
**dass** die Eingabespitze (51) einen weichen Kunststoffkern (53) aufweist, insbesondere, dass das Eingabemittel (50) ein Eingabestift (55) mit einem weichen Kunststoffkern (53) ist, wobei ein Schaft (54) des Eingabestiftes (55) hart und griffig ist und der weiche Kunststoffkern (53) die Eingabespitze (51) bildet.

4. Mobiler ldentifikationsgeber (10) nach einem der vorhergehenden Ansprüche,
**dadurch gekennzeichnet,**
**dass** das Eingabemittel (50) in einer Aufnahme (25) lagert, insbesondere, dass die Aufnahme (25) hülsenartig ausgeformt ist und der Eingabestift (55) in der hülsenartigen Aufnahme (25) lagert.

5. Mobiler Identifikationsgeber (10) nach Anspruch 4 ,
**dadurch gekennzeichnet,**
**dass** ein Kraftspeicher innerhalb der Aufnahme (25) an dem Eingabemittel (50) angeordnet ist und der Kraftspeicher in einer Stellung des Eingabemittels (50) das Eingabemittel (50) aus der Aufnahme (25) drückt.

6. Mobiler Identifikationsgeber (10) nach einem der vorhergehenden Ansprüche,
**dadurch gekennzeichnet,**
**dass** das Eingabemittel (50) und der Notschlüssel (60) einstückig sind.

7. Mobiler Identifikationsgeber (10) nach einem der vorhergehenden Ansprüche,
**dadurch gekennzeichnet,**
**dass** der Notschlüssel (60) ein Bartelement (63) aufweist und das Eingabemittel (50) an dem Bartelement (63) angeordnet ist.

8. Mobiler Identifikationsgeber (10) nach einem der vorhergehenden Ansprüche,
**dadurch gekennzeichnet,**
**dass** der Notschlüssel (60) ein Griffbereich (64) aufweist und das Eingabemittel (50) an dem Griffbereich (64) angeordnet ist, insbesondere, dass das Eingabemittel (50) an einem Eckbereich des Griffbereiches (64) angeordnet ist.

9. Mobiler Identifikationsgeber (10) nach einem der vorhergehenden Ansprüche
**dadurch gekennzeichnet,**
**dass** ein Kraftspeicher innerhalb des Schlüssellagers (61) an dem Notschlüssel (60) angeordnet ist und der Kraftspeicher in einer Stellung des Notschlüssels (60) den Notschlüssel (60) aus dem Schlüssellager (61) drückt.

10. Mobiler Identifikationsgeber (10) nach einem der vorhergehenden Ansprüche,
**dadurch gekennzeichnet,**
**dass** das Eingabemittel (50) eine Beleuchtungseinheit aufweist, insbesondere dass die Beleuchtungseinheit eine LED oder eine OLED ist.

11. Mobiler Identfikationsgeber (10) nach einem der vorhergehenden Ansprüche,
**dadurch gekennzeichnet,**
**dass** der mobile Identifikationsgeber (10) einen zentralen Speicher und/oder eine Schnittstelle (15) aufweist, wobei der mobile Identifikationsgeber (10) über die Schnittstelle (15) mit einem externen Rechner in Verbindung treten kann, insbesondere dass die Schnittstelle (15) eine der folgenden Normen aufweist: Infrarot, Bluetooth, W-LAN, USB, RS 232 oder RS 485.

## Claims

1. Mobile identification transmitter (10) of a safety system for a keyless activation of a locking device of a vehicle (40), with
a housing (20) and a sensor display (30), whereby
an electric unit with a transmitting and receiving unit is assembled within the housing (20), communicating with a vehicle related transmitting and receiving unit (41), with which an identity verification for determination of an operator authorization can be accomplished,
a surface (31) of the sensor display (30) serves on the one hand as an input and on the other hand as an output of information,
that the mobile identification transmitter (10) comprises a pin like input device (50) whereby the input device (50) serves for the input of information,
**characterized in that**,
the housing (20) comprises a key bearing (61) and that the key bearing (61) embeds an emergency key (60), whereby the emergency key (60) serves for operating a mechanical lock of the vehicle (40) and is reversibly removable from the key bearing (61) and that the input device (50) is assembled at the emergency key (60).

2. Mobile identification transmitter (10) according to claim 1,
**characterized in that**,
the input device (50) comprises an input peek (51) and a contact between the sensor display (30) and the input peek (51) allows an input of information.

3. Mobile identification transmitter (10) according to claim 2,
**characterized in that**,
the input peek (51) comprises a soft plastic core (53), particularly that the input device (50) is an input pin (55) with a soft plastic core (53) whereby a spindle (54) of the input pin (55) is stiff and handy and the soft plastic core (53) forms the input peek (51).

4. Mobile identification transmitter (10) according to one of the preceding claims,
**characterized in that**,
the input device (50) is embedded in a recess (25), particularly that the recess (25) is shaped like a casing and the input pin (55) is embedded within the casing-like recess (25).

5. Mobile identification transmitter (10) according to claim 4,
**characterized in that**,
an energy storage is assembled at the input device (50) within the recess (25) and the energy storage is in a certain position of the input device (50) pushing the input device (50) out of the recess (25).

6. Mobile identification transmitter (10) according to one of the preceding claims,
**characterized in that**,
the input device (50) and the emergency key (60) are made of one piece.

7. Mobile identification transmitter (10) according to one of the preceding claims, **characterized in that**,
the emergency key (60) comprises a bit element (63) and the input device (50) is assembled at the bit element (63).

8. Mobile identification transmitter (10) according to one of the preceding claims,
**characterized in that**,
the emergency key (60) comprises a handle area (64) and the input device (50) is assembled at the handle area (64), particularly that the input device (50) is assembled in a corner region of the handle area (64).

9. Mobile identification transmitter (10) according to one of the preceding claims,
**characterized in that**,
the energy storage is assembled at the emergency key (60) within the key bearing (61) and that the energy storage is within a certain position of the emergency key (60) pushing the emergency key (60) out of the key bearing (61).

10. Mobile identification transmitter (10) according to one of the preceding claims,
**characterized in that**,
the input device (50) comprises an illumination unit, particularly that the illumination unit is an LED or an OLED.

11. Mobile identification transmitter (10) according to one of the preceding claims,
**characterized in that**,
the mobile identification transmitter (10) comprises a central memory and/or an interface whereby the mobile identification transmitter (10) can be connected with an external computer via the interface (15), particularly that the interface (15) comprises one of the following standards: infrared, bluetooth, W-Lan, USB, RS 232 or RS 485.

## Revendications

1. Transmetteur d'identification mobile (10) d'un système de sécurité, conçu pour une activation sans clé d'un dispositif de fermeture d'un véhicule automobile (40), comprenant un boîtier (20) et un affichage de capteur (30),
sachant qu'une unité électronique dotée d'une unité émettrice et réceptrice est disposée dans le boîtier (20) et est en communication avec une unité émettrice et réceptrice (41) sur le véhicule automobile, au moyen de laquelle un contrôle d'identification peut être effectué afin d'établir une autorisation d'accès d'utilisateur,
sachant qu'une surface (31) de l'affichage de capteur (30) sert d'une part à l'entrée et d'autre part à la sortie d'une information,
sachant que le transmetteur d'identification mobile (10) présente un moyen d'entrée du genre stylet (50), le moyen d'entrée (50) servant à entrer l'information,
**caractérisé en ce que** le boîtier (20) présente un logement de clé (61) et le logement de clé (61) reçoit une clé de secours (60), sachant que la clé de secours (60) sert à actionner une serrure mécanique du véhicule automobile (40) et peut être retirée du logement de clé (61) de manière réversible,
et **en ce que** le moyen d'entrée (50) est disposé sur la clé de secours (60).

2. Transmetteur d'identification mobile (10) selon la revendication 1, **caractérisé en ce que** le moyen d'entrée (50) présente une pointe d'entrée (51), et un contact entre l'affichage de capteur (30) et la pointe d'entrée (51) permet d'entrer l'information.

3. Transmetteur d'identification mobile (10) selon la revendication 2, **caractérisé en ce que** la pointe d'entrée (51) présente une âme (53) en matière plastique souple, en particulier **en ce que** le moyen d'entrée (50) est un stylet d'entrée (55) doté d'une âme (53) en matière plastique souple, sachant qu'un corps (54) du stylet d'entrée (55) est dur et facile à saisir et que l'âme (53) en matière plastique souple forme la pointe d'entrée (51).

4. Transmetteur d'identification mobile (10) selon l'une des revendications précédentes, **caractérisé en ce que** le moyen d'entrée (50) est logé dans un réceptacle (25), en particulier **en ce que** le réceptacle (25) est réalisé en forme de tube et le stylet d'entrée (55) est logé dans le réceptacle du genre tube (25)

5. Transmetteur d'identification mobile (10) selon la revendication 4, **caractérisé en ce qu'**un accumulateur de force est disposé à l'intérieur du réceptacle (25) sur le moyen d'entrée (50) et l'accumulateur de force, dans une position du moyen d'entrée (50), pousse le moyen d'entrée (50) hors du réceptacle (25).

6. Transmetteur d'identification mobile (10) selon l'une des revendications précédentes, **caractérisé en ce que** le moyen d'entrée (50) et la clé de secours (60) sont réalisés d'un seul tenant.

7. Transmetteur d'identification mobile (10) selon l'une des revendications précédentes, **caractérisé en ce que** la clé de secours (60) présente un panneton (63) et le moyen d'entrée (50) est disposé sur le panneton (63).

8. Transmetteur d'identification mobile (10) selon l'une des revendications précédentes, **caractérisé en ce que** la clé de secours (60) présente une zone de prise en main (64) et le moyen d'entrée (50) est disposé sur la zone de prise en main (64), en particulier **en ce que** le moyen d'entrée (50) est disposé sur une zone de coin de la zone de prise en main (64).

9. Transmetteur d'identification mobile (10) selon l'une des revendications précédentes, **caractérisé en ce qu'**un accumulateur de force est disposé à l'intérieur du logement de clé (61) sur la clé de secours (60) et l'accumulateur de force, dans une position de la clé de secours (60), pousse la clé de secours (60) hors du logement de clé (61).

10. Transmetteur d'identification mobile (10) selon l'une des revendications précédentes, **caractérisé en ce que** le moyen d'entrée (50) présente une unité d'éclairage, en particulier **en ce que** l'unité d'éclairage est une diode électroluminescente (DEL) ou une diode électroluminescente organique (DELO).

11. Transmetteur d'identification mobile (10) selon l'une des revendications précédentes, **caractérisé en ce que** le transmetteur d'identification mobile (10) présente une mémoire centrale et/ou une interface (15), sachant que le transmetteur d'identification mobile (10) peut entrer en communication avec un calculateur externe par l'intermédiaire de l'interface (15), en particulier **en ce que** l'interface (15) présente une des normes suivantes : infrarouge, Bluetooth, W-LAN (réseau local sans fil), USB, RS 232 ou RS 485.
